# EUROPÄISCHE PATENTANMELDUNG

(11) **EP 0 894 574 A2**
(43) Veröffentlichungstag der Anmeldung: **03.02.1999**
(21) Anmeldenummer: 98108299.3
(22) Anmeldetag: 07.05.1998
(51) Int. Cl.: B25B 5/16

(54) **Schraubzwinge**

(30) Priorität: 29.07.1997 DE 29713483 U
(71) Anmelder: Kleinbongartz & Kaiser, 42853 Remscheid (DE)
(72) Erfinder: Kleinbongartz, wolfgang, 42853 Remscheid (DE)
(74) Vertreter: Grundmann, Dirk, Dr.

(57) **Zusammenfassung**

Die Erfindung betrifft eine Schraubzwinge, aufweisend einen Festbügel mit Spannfläche und einen, auf einer mit dem Festbügel verbundenen Gleitschiene verlagerbaren und festklemmbaren Gleitbügel, welcher Träger einer Gewindespindel (7) mit endseitigem, drehbar gelagertem Spannteller (11) ist. Um eine Schraubzwinge, insbesondere eine Ganzstahl-Schraubzwinge vibrationssicherer auszugestalten, wird vorgeschlagen, daß der Spannteller (11) in Spindelerstreckungsrichtung gegenüber dem Gleitbügel elastisch ausweichbar gelagert ist.

## Beschreibung

Die Erfindung betrifft eine Schraubzwinge, aufweisend einen Festbügel mit Spannfläche und einen, auf einer mit dem Festbügel verbundenen Gleitschiene verlagerbaren und festklemmbaren Gleitbügel, welcher Träger einer Gewindespindel mit endseitigem, drehbar gelagertem Spannteller ist.

Derartige Schraubzwingen sind in verschiedenen Ausführungsformen bekannt. So werden bspw. auf dem Markt sogenannte Ganzstahl-Schraubzwingen, bei welchen der Festbügel und die Gleitschiene einstückig, bspw. aus gezogenem Blankstahl hergestellt sind. Weiter sind Schraubzwingen bekannt, bei welchen an einer Stahl-Gleitschiene ein, bspw. aus Temperguß hergestellter Festbügel fest angeordnet ist. Auf der Stahl-Gleitschiene ist ein bspw. aus Temperguß hergestellter Gleitbügel verlagerbar. Bei den bekannten Schraubzwingen wird der Gleitbügel beim Einspannen eines Werkstückes verspannt derart, daß sich dieser an der Gleitschiene festklemmt. Hier sind weiter verschiedene Hilfsmittel zur Bildung einer Rutschsicherung bekannt. Hier sei bspw. die DE-A1 32 18 486 erwähnt. Diese besitzt eine Rutschsicherung im Bereich der Durchdringung von Gleitschiene und Gleitbügel. Diese tritt in Wirkung sobald zwischen dem Spannteller und dem Festbügel ein Werkstück eingespannt ist. Es hat sich jedoch insbesondere bei Ganzstahl-Schraubzwingen herausgestellt, daß diese trotz der erwähnten Rutschsicherung bei Vibration zu zum Lösen neigen.

Im Hinblick auf den zuvor beschriebenen Stand der Technik wird eine technische Problematik der Erfindung darin gesehen, eine Schraubzwinge, insbesondere Ganzstahl-Schraubzwinge vibrationssicherer auszugestalten.

Diese Problematik ist zunächst und im wesentlichen beim Gegenstandes des Anspruches 1 gelöst, wobei darauf abgestellt ist, daß der Spannteller in Spindelerstreckungsrichtung gegenüber dem Gleitbügel elastisch ausweichbar gelagert ist. Durch diese Ausgestaltung ist vorteilhafterweise einem Lösen der Schraubzwinge durch Vibration entgegengewirkt. Diese Vibrationen werden in vorteilhafter Weise durch den elastisch ausweichbaren Spannteller aufgefangen, womit sich die Vibration nicht nachteilig auf die Klemmung von Gleitbügel und Gleitschiene auswirken kann. Die durch die Vibration auf den Spannteller wirkenden Stöße werden nicht oder zumindest nicht in beeinträchtigender Weise auf die Gewindespindel und somit auf die Gleitbügel übertragen. Die elastisch ausweichbare Lagerung des Spanntellers ist in bevorzugter Form durch ein im Spannteller angeordnetes elastisches Element gegeben. Letzteres kann bspw. in Form eines elastischen und somit Vibrationen aufnehmbaren Kunststoffteils gebildet sein. Weiter ist denkbar, als elastisches Element eine Feder einzusetzen. Wie aus dem Stand der Technik bekannt, ist der Spannteller derart auf der Gewindespindel angeordnet, daß sich dieser taumelartig sich der Oberfläche des einzuspannenden Werkstückes einstellen kann. Hierzu weist das dem Spannteller zugewandte Ende der Gewindespindel einen Gelenkkopf auf, welcher Aufnahme findet in dem Spannteller. Erfindungsgemäß ist hier vorgesehen, daß der Gelenkkopf des Spindelendes von dem elastischen Element unterfüttert ist. Demnach ist das elastische Element in vorteilhafter Weise in axialer Verlängerung der Gewindespindel zwischen der Spannfläche des Spanntellers und dem Gelenkkopf positioniert, womit die direkt über die Spannfläche auf den Gelenkkopf einwirkenden Stöße durch das zwischengeschaltete elastische Element abgefangen werden. In einer vorteilhaften Weiterbildung des Erfindungsgegenstandes ist vorgesehen, daß das elastische Element eine, zwischen der Spannfläche des Spanntellers und dem Gelenkkopf in einer Aussparung einliegende Tellerfederanordnung ist. Weiter ist diesbezüglich vorgesehen, daß der Gelenkkopf an einer Kraftübertragungsplatte anliegt, in deren Verdecktlage die, zwei Tellerfedern aufweisende Tellerfederanordnung sitzt. Der Spannteller stützt sich demzufolge über die beiden Tellerfedern und der zwischengeschalteten Kraftübertragungsplatte auf dem Gelenkkopf ab und ist somit gegenüber dem Gleitbügel elastisch ausweichbar gelagert. Die beiden Tellerfedern werden in üblicher Weise gegensinnig angeordnet und sind durch die zwischengeschaltete Kraftübertragungsplatte gegen ein Verrücken oder gegen Beschädigungen durch den Gelenkkopf bei Schwenkbewegungen des Spanntellers geschützt. Um den Spannteller als Verschleißteil auswechselbar zu gestalten, ist vorgesehen, daß der Gelenkkopf von einem lösbaren Rückhalteteil in dem Spannteller in Achsrichtung gefesselt ist. So kann in einfachster Weise nach einem Verschleiß der Spannfläche der Spannteller nach Lösen des Rückhalteteiles von dem Gelenkkopf abgehoben und ausgewechselt werden. Hier ist weiter vorgesehen, daß das Rückhalteteil eine Haarnadelfeder ist. Diese unterfängt in Einbaustellung den Gelenkkopf und ist gesichert in dem Spannteller. Die im Bereich der Haarnadelfeder gebildete Durchtrittsöffnung ist hierbei kleiner gewählt als der Gelenkkopf-Durchmesser, womit der Gelenkkopf in der Einbausituation sicher gefangen ist. Zum Abnehmen des Spanntellers wird die Haarnadelfeder in einfachster Weise bevorzugt radial nach außen gezogen unter Freigabe des Gelenkkopfes. In einer Weiterbildung des Erfindungsgegenstandes ist vorgesehen, daß das Rückhalteteil ein, in einer Innenringnut einliegender Klemmring ist. Dieser Klemm- bzw. Sicherungsring ist in der Kupplungsstellung von Gelenkkopf und Spannteller sicher in der Innenringnut des Spanntellers gegen Herausfallen gehalten. Auch dieser Klemmring weist einen Öffnungsdurchmesser auf, welcher kleiner gewählt ist als der Gelenkkopf-Durchmesser. Zur Lösung der Verbindung wird der Klemmring radial nach außen aus der Innenringnut gezogen, wonach der Gelenkkopf freigegeben ist. In einer Weiterbildung des Erfindungsgegenstandes ist vorgesehen, daß die Schraubswinge eine mit dem Festbügel verbundene Stahlschiene mit Längskantenriffelung aufweist und der Gleitbügel im Bereich seines Führungsauges eine ebenfalls verzahnte Rutschsicherung aufweist. Bei einem Einspannen eines Werkstückes verkantet sich der Gleitbügel gegenüber der Gleitschiene, wobei in dieser Stellung die Rutschsicherung in die Längskantenriffelung der Stahl-Gleitschiene eingreift. Hierdurch ist der Gleitbügel in der Spannstellung gegen Abrutschen gesichert. Schließlich ist in vorteilhafter Weise vorgesehen, daß die Rutschzicherung ein im Bereich der Klemmkante in das Auge ragender Stahlstift ist. Letzterer erstreckt sich bevorzugt quer zur Verlagerungsrichtung des Gleitbügels und wirkt mit seiner Verzahnung auf eine schienenschmalseitig angeordnete Längskantenriffelung.

Nachstehend ist die Erfindung anhand der beigefügten Zeichnung, welche jedoch lediglich zwei Ausführingsbeispiele darstellt, näher erläutert. Es zeigt:
- Fig. 1: eine erfindungsgemäße Schraubzwinge in einer Seitenansicht, eine erste Ausführungsform betreffend;
- Fig. 2: eine partiell geschnittene Ausschnittsdarstellung gemäß dem Bereich II-II in Fig. 1;
- Fig. 3: den Schnitt gemäß der Linie III-III in Fig. 2;
- Fig. 4: eine der Fig. 1 entsprechende Darstellung, jedoch eine zweite Ausführungsform betreffend;
- Fig. 5: eine Ausschnittsvergrößerung gemäß dem Bereich V-V in Fig. 4, jedoch geschnitten dargestellt;
- Fig. 6: den Schnitt gemäß der Linie VI-VI in Fig. 4.

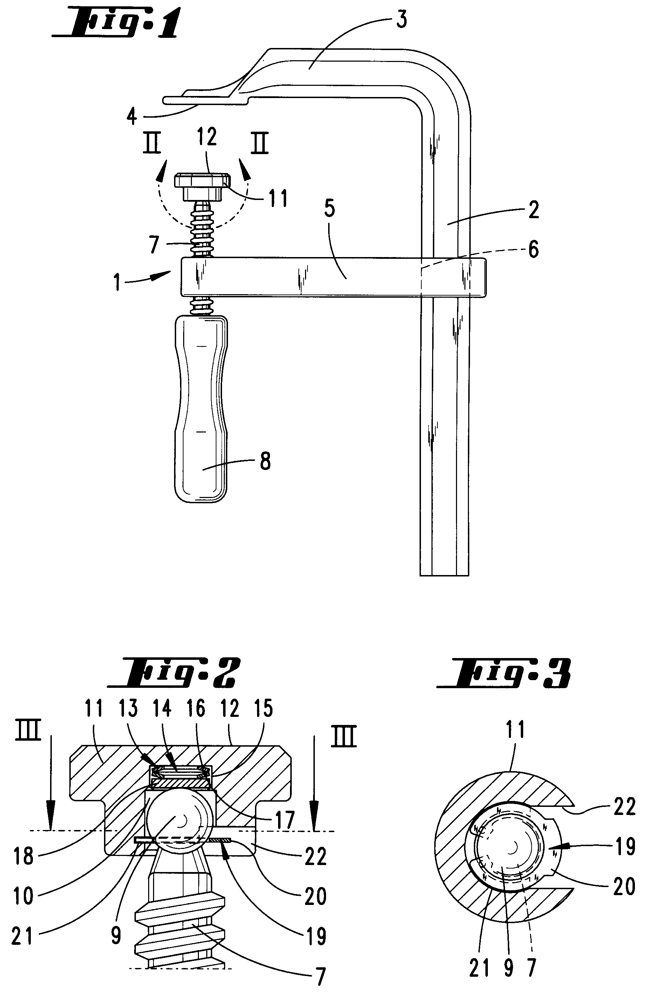

Dargestellt und beschrieben ist zunächst mit Bezug zu Fig. 1 ein erstes Ausführungsbeispiel einer Schraubzwinge 1 in Form einer Ganzstahl-Schraubzwinge. Diese kann bspw. bestehen aus einem gezogenen Blankstahl, wobei eine Gleitschiene 2 und ein an einem Ende dieser Gleitschiene 2 sich rechtwinklig zu dieser erstreckender Festbügel 3 einstückig ausgebildet sind. Im freien Endbereich bildet der Festbügel 3 unterseitig eine Spannfläche 4 aus.

Auf der Gleitschiene 2 ist ein Gleitbügel 5 verschiebbar gelagert. Letzterer erstreckt sich ebenfalls im wesentlichen senkrecht zur Gleitschiene 2 und bildet zum Durchtritt derselben ein Auge 6 aus.

In dem frei auskragenden Endbereich weist der Gleitbügel 5 eine nicht näher dargestellte, parallel zur Gleitschienen-Längserstreckung verlaufende Gewindebohuung auf, zur Aufnahme einer Gewindespindel 7. Letztere kann in bekannter Weise in Form einer leichtgängigen Stahlspindel mit Trapezgewinde gebildet sein.

Die Gewindespindel 7 weist an dem, dem Festbügel 3 abgewandten Ende einen Drehgriff 8 auf. Das andere Ende der Gewindespindel 7 ist als, im wesentlichen kugelförmiger Gelenkkopf 9 gebildet, welcher Aufnahme findet in einer Gelenktasche 10 eines Spanntellers 11. Dieser Spannteller 11 bildet mit seiner der Spannfläche 4 des Festbügels 3 zugewandten, ebenen Oberseite eine Gegenspannfläche 12 aus. Zwischen den beiden Spannflächen 4 und 12 kann durch Einstellen der Spannweite vermittels Verlagerung des Gleitbügels 5 auf der Gleitschiene 2 und anschließender Drehverlagerung der Gewindespindel 7 mit damit einhergehender Axialverlagerung des Spanntellers 11 ein Werkstück eingespannt werden.

Die beim Einspannen auftretenden Kräfte werden nicht direkt über den Spannteller 11 in die Gewindespindel 7 geleitet, sondern indirekt unter Zwischenschaltung eines elastischen Elementes 13. Letzteres ist in dem gezeigten Ausführungsbeispiel eine Tellerfederanordnung 14, welche in einer Aussparung 15 einliegt. Die Anordnung ist so gewählt, daß die aus zwei Tellerfedern 16, 17 bestehende Tellerfederanordnung 14 in Verlängerung zur Gewindespindelachse liegend zwischen dem Gelenkkopf 9 und der Gegenspannfläche 12 ausgerichtet ist.

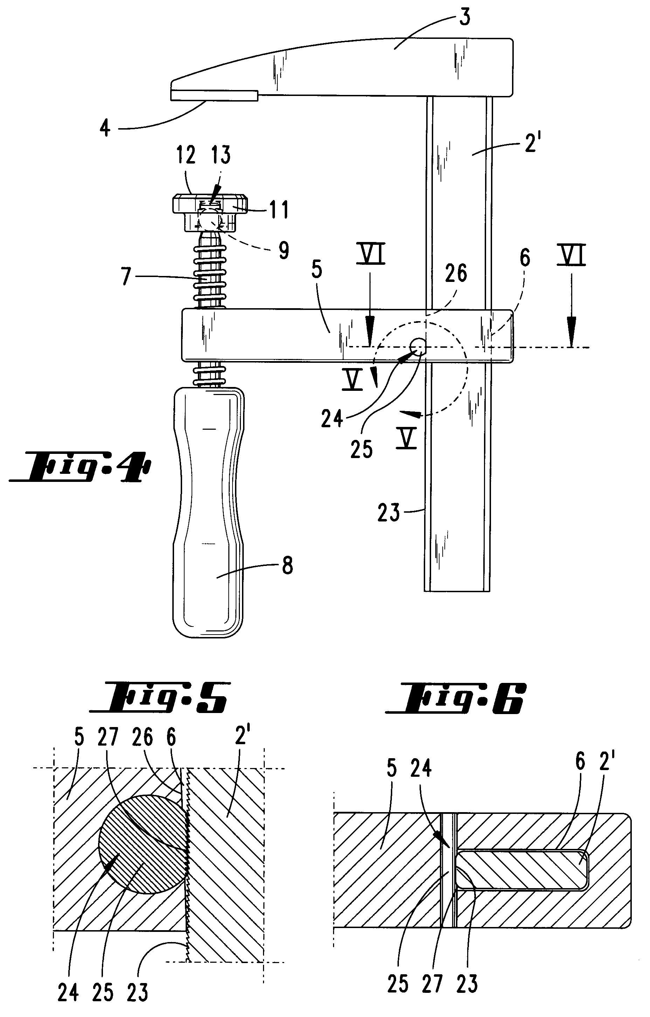

Zwischen der Tellerfederanordnung 14 bzw. der unteren Tellerfeder 17 und dem Gelenkkopf 9 ist eine, gleichfalls in der Aussparung 15 einliegende Kraftübertragungsplatte 18 zwischengeschaltet (vergl. Fig. 2).

Durch das zwischengeschaltete elastische Element 13 in Form einer Tellerfederanordnung 14 ist der Spannteller 11 in Spindelerstreckungsrichtung gegenüber dem Gleitbügel 5 elastisch ausweichbar gelagert. Dies führt zu dem vorteilhaften Effekt, daß sich die Schraubzwinge 1 bei einem eingespannten Werkstück nicht infolge von Vibrationen lösen kann. Die durch die Vibrationen eingeleiteten Stöße werden in einfachster Weise durch das elastische Element 13 aufgefangen und nicht bzw. in nicht beeinträchtigender Weise in die Gewindespindel 7 und somit in den Gleitbügel 5 übertragen.

Der Spannteller 11 bzw. dessen Gegenspannfläche 12 unterliegt bei häufigem Gebrauch einem Verschleiß. Um den Spannteller 11 auswechselbar zu gestalten, ist ein lösbares Rückhalteteil 19 in Form eines Klemmringes 20 vorgesehen, welcher den Gelenkkopf 9 der Gewindespindel 7 in dem Spannteller 11 in Achsrichtung fesselt (vergl. Fig. 2).

Die Anordnung ist hierbei so gewählt, daß das Rückhalteteil 19 bzw. der Klemmring 20 den Gelenkkopf 9 auf der der Gewindespindel 7 zugewandten Seite taillenartig unterfängt. Der Innendurchmesser des Klemmringes 20 ist entsprechend kleiner gewählt als der Gelenkkopfdurchmesser.

Der klemmring 20 ist im wesentlichen senkrecht zur Gewindespindelachse und parallel zur Gegenspannfläche 12 des Spanntellers 11 ausgerichtet und liegt in einer Innenringnut 21 des Spanntellers 11 ein.

Zum Lösen der Gelenkverbindung ist der klemmring 20 radial nach außen abziehbar, wozu der Spannteller 11 eine radial ausgerichtete, sowohl zur Unterseite des Spanntellers 11 als auch zur Mantelseite hin offene Entnahmeaussparung 22 besitzt. Letztere ist breitenmäßig, senkrecht zur Gewindespindelachse gemessen, etwas kleiner gewählt als der Durchmesser der Innenringnut 21, so daß der Klemmring 20 in der Innenringnut 21 einliegend gegen Herausfallen gesichert ist. Die in Axialrichtung gemessene Höhe der sich bis in die Gelenktasche 10 erstreckenden Entnahmeaussparung 22 ist so groß gewählt, daß der in dieser Aussparung 22 freiliegende Bereich des Klemmringes 20 gut gegriffen werden kann, bspw. vermittels einer Zange.

Nach einem radialen Abziehen des Klemmringes 20 ist der Spannteller 11 von der Gewindespindel 7 abhebbar. Nach Aufsetzen eines neuen Spanntellers 11 wird der Klemmring 20 in einfachster Weise wieder in die Innenringnut 21 eingedrückt.

Anstelle des in den Darstellungen gezeigten Klemmringes 20 kann als Rückhalteteil 19 auch eine Haarnadelfeder dienen.

Ist die Gewindespindel 7 bis zur Auflage des Spanntellers 11 auf den Gleitbügel 5 herunterverlagert, so dreht die Gewindespindel 7 in bekannter Weise leer, so daß hierdurch keine abhebenden, die Gelenkverbindung aufhebenden Kräfte auf den Spannteller 11 einwirken.

In Fig. 4 ist eine Schraubzwinge 1 in einer zweiten Ausführungsform dargestellt. Diese setzt sich im wesentlichen zusammen aus einer Stahl-Gleitschiene 2', an deren einem freien Ende ein bspw. aus Temperguß hergestellter Festbügel 3 angeordnet ist. Auch letzterer weist an seinem frei auskragenden Ende unterseitig eine Spannfläche 4 auf.

Auf der Stahl-Gleitschiene 2' ist ein, bspw. ebenfalls aus Temperguß hergestellter Gleitbügel 5 verschiebbar gelagert. Dieser Gleitbügel 5 trägt an seinem freien Ende eine Gewindespindel 7 mit Spannteller 11 und Drehgriff 8.

Auch in diesem Ausführungsbeispiel ist zwischen dem Gelenkkopf 9 und der Gegenspannfläche 12 im Bereich des Spanntellers 11 ein elastisches Element 13 in Form einer Tellerfederanordnung 14 geschaltet, zur Verhinderung eines Lösens der Schraubzwinge 1 infolge von Vibrationen.

Gleichfalls ist auch hier der Spannteller 11 lösbar an der Gewindespindel 7 gemäß der ersten Ausführungsform gehaltert.

Weiter ist in dieser zweiten Ausführungsform eine Längskantenriffelung 23 der Stahl-Gleitschiene 2' vorgesehen. Letztere ist in Form einer feinen Verzahnung der Längskantenoberfläche gebildet.

Der Gleitbügel 5 besitzt eine, mit dieser Längskantenriffelung 23 zusammenwirkende Rutschsicherung 24 in Form eines Stahlstiftes 25. Letzterer ist im Bereich der Klemmkante 26 angeordnet, wobei ein Teilbereich des Stahlstiftes 25 in das Auge 6 des Gleitbügels 5 hineinragt und dort mit einer Verzahnung 27 versehen ist.

Wird nunmehr ein Werkstück zwischen Festbügel 3 und Gleitbügel 5 bzw. zwischen deren Spannflächen 4 und 12 eingespannt, so verkantet der Gleitbügel 5 gegenüber der Stahl-Gleitschiene 2' (vergl. Fig. 5). Dies hat ein Eingreifen der Verzahnung 27 des Stahlstiftes 25 in die Längskantenriffelung 23 der Stahl-Gleitschiene 2' zur Folge. Hierdurch ist ein Abrutschen des Gleitbügels 5 entlang der Stahl-Gleitschiene 2' in einfachster Weise verhindert.

Nach einem Lösen der Verspannung ist der Gleitbügel 5 aus seiner verkanteten Stellung zur Stahl-Gleitschiene 2' zurückkippbar, was zugleich eine Aufhebung des Zahneingriffes zur Folge hat. Der Gleitbügel 5 ist hiernach frei verschiebbar auf der Stahl-Gleitschiene 2'.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Schraubzwinge (1), aufweisend einen Festbügel (3) mit Spannfläche (4) und einen, auf einer mit dem Festbügel (3) verbundenen Gleitschiene (2, 2') verlagerbaren und festklemmbaren Gleitbügel (5), welcher Träger einer Gewindespindel (7) mit endseitigem, drehbar gelagertem Spannteller (11) ist, dadurch gekennzeichnet, daß der Spannteller (11) in Spindelerstreckungsrichtung gegenüber dem Gleitbügel (5) elastisch ausweichbar gelagert ist.

2. Schraubzwinge nach Anspruch 1 oder insbesondere danach, gekennzeichnet durch ein im Spannteller (11) angeordnetes elastisches Element (13).

3. Schraubzwinge nach einem oder mehreren der vorhergehenden Ansprüche oder insbesondere danach, dadurch gekennzeichnet, daß der Gelenkkopf (9) des Spindelendes von dem elastischen Element (13) unterfüttert ist.

4. Schraubzwinge nach einem oder mehreren der vorhergehenden Ansprüche oder insbesondere danach, dadurch gekennzeichnet, daß das elastische Element (13) eine, zwischen der Spannfläche (12) des Spanntellers (11) und dem Gelenkkopf (9) in einer Aussparung (15) einliegende Tellerfederanordnung (14) ist.

5. Schraubzwinge nach einem oder mehreren der vorhergehenden Ansprüche oder insbesondere danach, dadurch gekennzeichnet, daß der Gelenkkopf (9) an einer Kraftübertragungsplatte (18) anliegt, in deren Verdecktlage die, zwei Tellerfedern (16, 17) aufweisende Tellerfederanordnung (14) sitzt.

6. Schraubzwinge nach einem oder mehreren der vorhergehenden Ansprüche oder insbesondere danach, dadurch gekennzeichnet, daß der Gelenkkopf (9) von einem lösbaren Rückhalteteil (19) in dem Spannteller (11) in Achsrichtung gefesselt ist.

7. Schraubzwinge nach einem oder mehreren der vorhergehenden Ansprüche oder insbesondere danach, dadurch gekennzeichnet, daß das Rückhalteteil (19) eine Haarnadelfeder ist.

8. Schraubzwinge nach einem oder mehreren der vorhergehenden Ansprüche oder insbesondere danach, dadurch gekennzeichnet, daß das Rückhalteteil (9) ein, in einer Innenringnut (21) einliegender Klemmring (20) ist.

9. Schraubzwinge nach einem oder mehreren der vorhergehenden Ansprüche oder insbesondere danach, dadurch gekennzeichnet, daß die Schraubzwinge (1) eine mit dem Festbügel (3) verbundene Stahl-Gleitschiene (2') mit Längskantenriffelung aufweist und der Gleitbügel (5) im Bereich seines Führungsauges (6) eine ebenfalls verzahnte Rutschsicherung (24) aufweist.

10. Schraubzwinge nach einem oder mehreren der vorhergehenden Ansprüche oder insbesondere danach, dadurch gekennzeichnet, daß die Rutschsicherung (24) ein im Bereich der Klemmkante (26) in das Auge (6) ragender Stahlstift (25) ist.
